# EUROPÄISCHE PATENTSCHRIFT

(11) **EP 4 201 639 B1**
(45) Veröffentlichungstag und Bekanntmachung des Hinweises auf die Patenterteilung: **13.11.2024**
(21) Anmeldenummer: 22212517.1
(22) Anmeldetag: 09.12.2022
(51) Int. Cl.: B29C 49/64, B29C 49/78, B29C 49/06, B29K 67/00, B29L 31/00

(54) **VERFAHREN UND VORRICHTUNG ZUM ERWÄRMEN VON KUNSTSTOFFVORFORMLINGEN MIT ABSORPTIONSMESSUNG**
METHOD AND DEVICE FOR HEATING PLASTIC PRE-FORMS WITH ABSORPTION MEASUREMENT
PROCÉDÉ ET DISPOSITIF DE CHAUFFAGE D'ÉBAUCHES EN PLASTIQUE AU MOYEN D'UNE MESURE D'ABSORPTION

(30) Priorität: 22.12.2021 DE 102021134262
(43) Veröffentlichungstag der Anmeldung: 28.06.2023
(73) Patentinhaber: Krones AG, 93073 Neutraubling (DE)
(72) Erfinder: Fischer, Simon, 93073 Neutraubling (DE); Lappe, Ulrich, 93073 Neutraubling (DE); Schober, Stefan, 93073 Neutraubling (DE)
(74) Vertreter: Hannke Bittner & Partner mbB Regensburg

(56) Entgegenhaltungen:
- EP-A1- 2 011 617
- EP-A1- 2 110 224
- EP-A2- 2 236 268
- WO-A1-2013/000988

## Beschreibung

Die vorliegende Erfindung bezieht sich auf ein Verfahren und eine Vorrichtung zum Herstellen von Kunststoffbehältnissen. Aus dem Stand der Technik ist es seit langem bekannt, dass Kunststoffvorformlinge erwärmt werden und diese erwärmten Kunststoffvorformlinge anschließen blasgeformt werden, beispielsweise mit einer Streckblasmaschine. Auch ist es bekannt, dass Kunststoffvorformlinge unmittelbar mit einem einzufüllenden Produkt expandiert werden. Derartige Streckblasanlagen verarbeiten damit Kunststoffvorformlinge, beispielsweise aus PET, zu Behältern. Die Kunststoffvorformlinge durchlaufen hierzu in der Regel eine Heizeinrichtung, welche die Kunststoffvorformlinge mittels Wärmestrahlung d. h. insbesondere mittels infraroter Strahlung auf eine Verarbeitungstemperatur erwärmt. Vorzugsweise handelt es sich hierbei um nahinfraroten (NIR-) Strahlung in einem entsprechenden Spektralbereich, der sich besonders für eine gleichmäßige Erwärmung des Kunststoffes eignet.

Die IR Strahlung wird mittels Emittern (wie etwa IR-Strahlern) erzeugt, welche ein Spektrum an elektromagnetischen Wellen ausstrahlen. Dabei kann es sich beispielsweise um ein kontinuierliches Spektrum ähnlich eines Planck'schen Strahlers handeln. Es wäre jedoch auch die Verwendung von diskreten Spektralbereichen möglich, beispielsweise eine Erwärmung mittels einer LED, eines Lasers, eines Magnetrons oder ähnlicher Einrichtungen. Für den Prozess der Erwärmung ist die Aufnahme der emittierten Strahlung in den Kunststoffvorformling von besonderer Bedeutung. Insbesondere durch den Einsatz von Emittern mit einem kontinuierlichen Spektrum abgestrahlter Energie wird diese nicht nur im infraroten, sondern zum Teil auch im sichtbaren Wellenlängenbereich abgegeben.

Aus dem Stand der Technik ist es bekannt, dass Messeinrichtungen vorgesehen sind, welche die Absorption (und/oder Transmission) im infraroten Wellenlängenbereich, beispielsweise an diskreten Stellen im Spektrum ermitteln. Im Folgenden wird teilweise vereinfachend von Absorption gesprochen es wird jedoch darauf hingewiesen, dass jeweils ein Absorptions- und/oder ein Transmissionsverhalten gemessen werden können.

Weiterhin ist es aus dem Stand der Technik bekannt, dass die letztlich hergestellten Behälter hinsichtlich ihrer Qualität überprüft werden, beispielsweise hinsichtlich einer Wandungsstärke der jeweiligen Grundkörper der Behältnisse. Im Stand der Technik wird daher insbesondere das Absorptionsverhalten im infraroten Spektralbereich beobachtet, da auch die eigentliche Erwärmung mit infrarotem Licht erfolgt.

Aus der EP 2 110 224 A1 ist dabei beispielswiese bekannt, dass an wenigstens einem Bereich des Kunststoffs der Infrarot Absorptionsgrad ermittelt wird und nachfolgend ein für diesen IR-Grad charakteristischer Wert bei der Herstellung der Behältnisse genutzt wird.

Aus EP2236268A2 ist bekannt den Absorptionsgrad im sichtbaren Licht zu ermitteln.

Der vorliegenden Erfindung liegt daher die Aufgabe zugrunde, das Wärme- oder Strahlungsaufnahmeverhalten der Kunststoffvorformlinge (und/oder der daraus später hergestellten Kunststoffbehältnisse im Vergleich zum Stand der Technik besser zu charakterisieren. Dies wird erfindungsgemäß durch ein Verfahren und eine Vorrichtung nach den unabhängigen Patentansprüchen erreicht. Vorteilhafte Ausführungsformen und Weiterbildungen sind Gegenstand der Unteransprüche.

Bei einem erfindungsgemäßen Verfahren zum Erwärmen von Kunststoffvorformlingen werden die Kunststoffvorformlinge entlang eines vorgegebenen Transportpfads transportiert, und während dieses Transports durch Beaufschlagung mit elektromagnetischer Strahlung erwärmt. Weiterhin wird eine Absorption und/oder Transmission der Kunststoffvorformlinge für Strahlung in einen infraroten Wellenlängenbereich bestimmt.

Erfindungsgemäß wird eine Absorption und/oder Transmission der Kunststoffvorformlinge und/oder der daraus hergestellten Kunststoffbehältnisse auch für Strahlung in einem sichtbaren Wellenlängenbereich bestimmt.

Wie oben erwähnt, wird im Stand der Technik üblicherweise ein infraroter Wellenlängenbereich bzw. ein Absorptionsverhalten des Kunststoffvorformlings in diesem Wellenlängenbereich bestimmt, um hieraus das Absorptionsverhalten für die erwärmende Strahlung zu generieren. Die Anmelderin hat jedoch herausgefunden, dass auch eine Berücksichtigung der Absorption im sichtbaren Wellenlängenbereich für das Erwärmungsverhalten der Kunststoffvorformlinge relevant ist. Dies beruht auch darauf, dass die Infrarotstrahler, die verwendet werden, um die Kunststoffvorformlinge zu erwärmen, auch im sichtbaren Wellenlängenbereich einen vergleichsweise hohen Energieanteil haben.

Aus dem internen Stand der Technik ist es teilweise bekannt, eine Farbe der Kunststoffvorformlinge oder der hieraus hergestellten Kunststoffbehältnisse zu erfassen. Diese ist als solche charakteristisch für die Wechselwirkungen des Behältermaterials mit dem elektromagnetischen Spektrum des sichtbaren Lichts. Dabei ist es auch bekannt, dass mittels geeigneter Messeinrichtungen die Farbe der Kunststoffvorformlinge und/oder die Farbe der hieraus gestellten hergestellten Behältnisse erfasst wird. Dabei findet eine Messung, hier teilweise in einem Spektralbereich des sichtbaren Lichts statt.

Die Anmelderin hat nun festgestellt, dass eine geeignete Aufbereitung der Messsignale der Farbe auch unterschiedliche Arten der Darstellung und Weiterverarbeitung dieser Information zulässt.

Im Stand der Technik fand üblicherweise der Bereich des sichtbaren Lichts keine besondere Beachtung. Dieser trägt jedoch ebenfalls zur Energieübertragung in den Kunststoffvorformlingen bei.

Im Stand der Technik teilweise vorgesehene Auswerteeinrichtungen zur Auswertung und Betrachtung der Farbinformation dienten dazu, geometrische oder oberflächliche Defekte der Kunststoffvorformlinge und/oder der hieraus hergestellten Kunststoffbehältnisse auszuwerten.

Unter dem sichtbaren Wellenlängenbereich wird im Folgenden derjenige Wellenbereich des Lichts verstanden, der mit dem menschlichen Auge wahrnehmbar ist. Insbesondere handelt es sich hierbei um einen Wellenlängenbereich zwischen ca. 400 nm und 780 nm. Unter dem infraroten Wellenlängenbereich wird derjenige Wellenlängenbereich verstanden, der größere Wellenlängen als 780 nm aufweist, insbesondere der nahinfrarote Wellenlängenbereich, der beispielsweise zwischen 780 nm und 3000 nm liegt. Daneben wäre jedoch auch eine Beobachtung des ferninfraroten (FIR) Wellenlängenbereichs denkbar.

Mit den Messeinrichtungen zur Erfassung der Absorption und/oder Transmission (bzw. des Absorptions- und/oder Transmissionsverhaltens) im infraroten Wellenlängenbereich sowie der Erfassung insbesondere der Farbe im sichtbaren Teil des elektromagnetischen Spektrums kann der Eindruck des Wärmeaufnahmeverhaltens der Kunststoffvorformlinge vervollständigt werden.

Bei einem bevorzugten Verfahren werden Grenzwerte für die Absorption und/oder Transmission der Kunststoffvorformlinge für die elektromagnetische Strahlung definiert. Sollten diese überschritten werden, ist es möglich, Alarme auszugeben, oder entsprechende Kunststoffvorformlinge vor oder nach der Erwärmung auszuschleusen.

Bei einem bevorzugten Verfahren wird eine Farbe der Kunststoffvorformlinge und/oder der hieraus hergestellten Kunststoffbehältnisse ermittelt und bevorzugt die Absorption und/oder Transmission der Kunststoffvorformlinge für Strahlung in dem sichtbaren Wellenlängenbereich aus der Farbe der Kunststoffvorformlinge ermittelt.

Mit anderen Worten ist es möglich, dass aus dem Farbeindruck der Kunststoffvorformlinge entsprechend auf deren Absorptionsverhalten und insbesondere deren Absorptionsverhalten im sichtbaren Spektrum geschlossen wird. Es wäre jedoch auch möglich, dass unmittelbar das Absorptionsverhalten und/oder Transmissionsverhalten bzw. die Absorption und/oder Transmission im sichtbaren Wellenlängenbereich gemessen wird. Die Verwendung des Farbeindrucks hat jedoch den Vorteil, dass entsprechende Messeinrichtung teilweise Bestandteil derartiger Vorrichtungen sind und daher keine weiteren Einrichtungen hinzugefügt werden müssen sondern lediglich die Auswertung der gewonnenen Messdaten geändert bzw. ergänzt wird.

Eine gezielte Nutzung der Farbinformation kann verwendet werden, um dahingehende Auswertungen zu erreichen. Dies kann beispielsweise die Umwandlung, Erfassung, Darstellung und Weiterverarbeitung vorteilhafter Farbkoordinaten beinhalten. Dabei kann bevorzugt ein Lab-Farbkoordinatensystem oder auch L*a*b*-Farbraum beziehungsweise CIELAB-Farbraum verwendet werden, welches sich besonders für die Darstellung eines Farbeindrucks für Menschen und/oder zur Erfassung von Farbunterschieden eignet.

Besonders bevorzugt kann die Absorption und/oder Transmission im infraroten Wellenlängenbereich und die Farbe und/oder die Absorption oder Transmission im sichtbaren Bereich einzeln oder in Kombination verwendet werden. So ist es beispielsweise möglich, dass eine Erfassung, Protokollierung oder auch eine statistische Auswertung der inspizierten Kunststoffvorformlinge und/oder Behälter erfolgt.

Bevorzugt werden die erfassten Daten der Absorption und/oder Transmission der Kunststoffvorformlinge gespeichert und bevorzugt für eine Vielzahl von Kunststoffvorformlingen gespeichert. Aus diesen gespeicherten Daten kann eine Statistik gebildet werden, beispielsweise hinsichtlich der Absorption und/oder Transmission einer bestimmten Charge von Kunststoffvorformlingen.

Daneben können die erfassten Daten der Absorption und/oder Transmission den einzelnen inspizierten Kunststoffvorformlingen zugeordnet werden. Auf diese Weise ist etwa eine Ausschleusung bestimmter einzelner Kunststoffvorformlinge möglich oder auch eine individuell unterschiedliche Behandlung einzelner Kunststoffvorformlinge, insbesondere in einem nachfolgenden Blasvorgang.

Daneben ist es wie oben erwähnt möglich, dass Grenzwerte, insbesondere diskrete Grenzwerte definiert werden, um beispielsweise Meldungen auszugeben, um die Produktion stillzusetzen oder um andere Eingriffe in die Abläufe der Verarbeitungsanlagen vorzunehmen.

Bei einem weiteren bevorzugten Verfahren wird wenigstens eine Absorption und/oder Transmission vor der Erwärmung der Kunststoffvorformlinge gemessen und/oder bestimmt. In diesem Fall wäre es möglich, bereits die Erwärmung der Kunststoffvorformlinge an die gemessene Absorption und/oder Transmission anzupassen. Daneben kann auch eine Farbauswertung vor der Erwärmung der Kunststoffvorformlinge erfolgen. Bei einem weiteren bevorzugten Verfahren wird eine Absorption und/oder Transmission während und/oder nach der Erwärmung der Kunststoffvorformlinge vorgenommen. Auf diese Weise können in Reaktion auf diese Messungen nachfolgende Verarbeitungsschritte, wie etwa ein Umformungsvorgang angepasst werden.

Bei einem bevorzugten Verfahren werden die erwärmten Kunststoffvorformlinge zu Kunststoffbehältnissen und insbesondere Kunststoffflaschen expandiert. Dies wird untenstehend genauer erläutert. Zu diesem Zweck können beispielsweise Blasformmaschinen insbesondere Streckblasmaschinen eingesetzt werden. Diese Expansion kann dabei durch Blasdruck erfolgen, aber auch mittels Flüssigkeit, beispielsweise mit einem abzufüllenden Getränk.

Bei einem weiteren bevorzugten Verfahren wird ein Absorptionsverhalten und/oder Transmissionsverhalten der aus den Kunststoffvorformlingen gefertigten Kunststoffbehältnisse bestimmt. Auch hier ist es wiederum möglich, dass das Absorptionsverhalten im infraroten Bereich oder auch im sichtbaren Bereich bestimmt wird. Dabei kann dies beispielsweise unmittelbar nach der Fertigung des Kunststoffbehältnisses erfolgen.

Bei einem weiteren bevorzugten Verfahren erfolgt eine Messung und/oder Auswertung kontinuierlich, wobei besonders bevorzugt Eingriffe vorgenommen werden, mit denen Prozessparameter einer (insbesondere nachfolgenden) Verarbeitungsanlage angepasst werden. Dabei kann das Ziel dieser Anpassung eine Sicherstellung einer konstanten Ausgangsqualität auch bei wechselnder Qualität der Kunststoffvorformlinge sein.

Besonders bevorzugt handelt es sich bei den Kunststoffvorformlingen um solche Kunststoffvorformlinge, die wenigstens zu einem vorgegebenen Anteil aus recyceltem Kunststoffmaterial bestehen. Derartige Kunststoffvorformlinge weisen oft eine geringere Homogenität ihres Materials auf.

Dies kann beispielsweise der Fall sein, wenn rezyklierter Kunststoff verwendet wird oder wenn eine wechselnde Verarbeitung verschiedener neuwertiger Kunststoffmaterialien erfolgt. Untenstehend werden genauer entsprechende Maßnahmen erläutert.

Bei einem bevorzugten Verfahren wird wenigstens eine Absorption und/oder Transmission ortsabhängig gemessen. So ist es möglich, dass ein Bereich des Kunststoffvorformling und/oder der Oberfläche des Kunststoffvorformlings (oder aber des hieraus gefertigten Behältnisses) hinsichtlich seiner Absorption und/oder Transmission untersucht wird. So kann die Absorption und/oder Transmission beispielsweise in Abhängigkeit von einer Position in der Längsrichtung oder über den Umfang des Kunststoffvorformlings sowie in beiden Richtungen angegeben werden.

Einem weiteren bevorzugten Verfahren werden Kunststoffvorformlinge in Reaktion auf die hier vorgenommenen Messungen ausgeschieden. Insbesondere kann dabei eine Ausscheidung von Kunststoffvorformlingen oder Behältern auf Basis dieser Messergebnisse erfolgen. Weiterhin wäre es auch möglich, dass Kunststoffvorformlinge oder Behältnisse auf Basis der Messergebnisse sortiert werden.

Mit der vorliegenden Erfindung kann eine verbesserte Qualitätssicherung in den Anlagen erreicht werden. Daneben können auch stabilere Produktionsprozesse erreicht werden und es ist eine Kosten- und Energieeinsparung in der Produktion durch einen gezielteren oder verringerten Ressourceneinsatz möglich. Daneben können bevorzugt auch Ausschussquoten verringert werden und es wird eine einfache Bedienung von Abläufen in den Verarbeitungsanlagen ermöglicht.

Bei einem weiteren bevorzugten Verfahren wird wenigstens ein für die gefertigten Behältnisse charakteristisches Merkmal bestimmt, wobei es sich bei diesem Merkmal besonders bevorzugt um eine Wandungsstärke des gefertigten Behältnisses oder um das Auftreten von Schwankungen der Wandungsstärke handelt. Dabei kann auch diese Wandungsstärke beispielsweise mit Absorptions- und/oder Transmissionsmessungen bestimmt werden.

Bei einem weiteren bevorzugten Verfahren wird aus dem Absorptionsverhalten und/oder Transmissionsverhalten für elektromagnetische Strahlung wenigstens ein Wert bestimmt, der für ein Wärmeaufnahmeverhalten der Kunststoffvorformlinge charakteristisch ist. Dabei ist es möglich, dass dieses Verhalten aus einem Infrarotabsorptionsverhalten und/oder einem Absorptionsverhalten (bzw. der Absorption und/oder Transmission) für sichtbares Licht bestimmt wird. Besonders bevorzugt wird dabei das Absorptionsverhalten in vorgegebenen Bereichen der Kunststoffvorformlinge bestimmt.

Besonders bevorzugt wird das Verhalten in Abhängigkeit von einer Höhe der Kunststoffvorformlinge bestimmt. Es wird in diesem Zusammenhang darauf hingewiesen, dass es auch möglich wäre, ein Reflexionsverhalten der Kunststoffvorformlinge und/oder der hieraus hergestellten Kunststoffbehältnisse zu bestimmen, um daraus deren Eigenschaften abzuleiten.

Bei einem weiteren bevorzugten Verfahren wird zur Bestimmung des Absorptions- und/oder Transmissionsverhaltens (bzw. der Absorption und/oder Transmission) ein Emitter verwendet, welcher die elektromagnetische Strahlung in einem vorgegebenen Wellenlängenspektrum ausgibt.

Dabei kann beispielsweise die Infrarotstrahlung mittels Emittern erzeugt werden, welche ein Spektrum an elektromagnetischen Wellen ausstrahlen. Besonders bevorzugt handelt es sich hierbei um ein kontinuierliches Spektrum, bevorzugt zum Beispiel in der Art eines Planck'schen Strahlers. Es wäre jedoch auch möglich, dass diskrete spektrale Bereiche ausgestrahlt werden, was beispielsweise mittels LEDs oder Lasers oder ähnlicher Einrichtungen erfolgen kann.

Bei einem bevorzugten Verfahren ist für den Prozess der Erwärmung die Aufnahme des emittierten Lichts bzw. der Strahlung in dem Kunststoffvorformling entscheidend. Insbesondere durch den Einsatz von Emittern mit einem kontinuierlichen Spektrum abgestrahlter Energie wird diese nicht nur im infraroten Teil des Wellenlängenspektrums, sondern zum Teil auch im sichtbaren Wellenlängenbereich abgegeben.

Bei einem bevorzugten Verfahren ist es möglich, dass eine Absorption und/oder Transmission im sichtbaren Wellenlängenbereich verwendet wird, um eine Farbe der Kunststoffvorformlinge und/oder zu ermitteln. Bei diesem Verfahren wird die Absorption und/oder Transmission in dem sichtbaren Wellenlängenbereich gemessen und aus dieser Absorption ermittelt bzw. berechnet, welchen Farbeindruck die Kunststoffvorformlinge erwecken werden.

Bei einem weiteren bevorzugten Verfahren wird eine statistische Auswertung der Kunststoffvorformlinge und/oder Kunststoffbehältnisse vorgenommen. Da ist es möglich, dass eine Vielzahl von Messergebnissen für eine Vielzahl von Kunststoffvorformlingen und/oder Kunststoffbehältnissen erfasst wird, auf deren Basis statistische Größen über ein Absorptionsverhalten abgeleitet und/oder ermittelt werden.

Die vorliegende Erfindung ist weiterhin auf eine Vorrichtung zum Erwärmen von Kunststoffvorformlingen gerichtet mit einer Transporteinrichtung, welche die Kunststoffbehältnisse entlang eines vorgegebenen Transportpfads transportiert und mit wenigstens einer Erwärmungseinrichtung, welche die Kunststoffvorformlinge durch Beaufschlagung mit elektromagnetischer Strahlung (und insbesondere Infrarotstrahlung) erwärmt und mit einer Erfassungseinrichtung, welche eine Absorption und/oder Transmission der Kunststoffvorformlinge für elektromagnetische Strahlung in einem Infraroten Wellenlängenbereich (und/oder mit einem Intensitätsmaximum im infraroten Wellenlängenbereich) erfasst.

Erfindungsgemäß weist die Vorrichtung eine und bevorzugt eine weitere Erfassungseinrichtung auf, welche eine Absorption und/oder Transmission der Kunststoffvorformlinge und/oder der später aus diesen Kunststoffvorformlingen hergestellten Kunststoffbehältnisse für elektromagnetische Strahlung (oder einen für diese Absorption und/oder Transmission charakteristischen Wert oder einen Wert, aus dem sich ein Wert für die Absorption und/oder Transmission ableiten lässt) in einem sichtbaren Wellenlängenbereich zumindest mittelbar erfasst.

Unter einer mittelbaren Erfassung wird verstanden, dass die Absorption und/oder Transmission aus anderen Daten, etwa aus einem Farbverhalten der Kunststoffvorformlinge oder Kunststoffbehältnisse abgeleitet wird. Unter einem unmittelbaren Erfassen wird insbesondere die Aufnahme eines Absorptions- und/oder Transmissionsspektrums verstanden.

Bei dieser weiteren Erfassungseinrichtung kann es sich dabei ebenfalls um eine Kombination aus einem Emitter und einen Detektor handeln, es wäre jedoch auch möglich, dass die Absorption und/oder Transmission der Kunststoffvorformlinge aus einem Farbeindruck der Kunststoffvorformlinge oder der Kunststoffbehältnisse gewonnen wird. Dieser Farbeindruck kann dabei etwa durch die Aufnahme von Bildern der Kunststoffvorformlinge oder Kunststoffbehältnisse mit einer Farbbildkamera erreicht werden.

Besonders bevorzugt ist die Transporteinrichtung dazu geeignet und bestimmt, die Kunststoffvorformlinge vereinzelt zu transportieren. Dabei können beispielsweise vereinzelte Halteeinrichtungen wie beispielsweise Haltedorne vorgesehen sein, welche einzelne Kunststoffvorformlinge halten und beispielsweise durch Heizgassen transportieren.

Bei einer weiteren bevorzugten Ausführungsform ist die Heizeinrichtung stationär angeordnet. So ist es möglich, dass die Kunststoffvorformlinge an Heizeinrichtungen wie beispielsweise Heizkästen vorbeitransportiert werden. Diese Heizeinrichtungen können dabei jeweils eine Vielzahl von Heizstrahlern aufweisen, die in der Längsrichtung der zu erwärmenden Kunststoffvorformlinge übereinander angeordnet sind und/oder dies sich in der Transportrichtung der Kunststoffvorformlinge erstrecken.

Bei einer besonders bevorzugten Ausführungsform ist die erste und/oder die zweite Erfassungseinrichtung ebenfalls stationär angeordnet und die Kunststoffvorformlinge werden an diesen vorbeitransportiert.

Weiterhin ist es auch möglich, dass wenigstens eine Erfassungseinrichtung vorgesehen ist, welche eine Wandungsstärke der Kunststoffvorformlinge ermittelt.

Bei einem weiteren bevorzugten Verfahren oder bei einer weiteren bevorzugten Vorrichtung kann die Absorption und/oder Transmission ortsaufgelöst bezüglich des Kunststoffvorformlings oder des Kunststoffbehältnisses gemessen werden.

Bei einer weiteren vorteilhaften Ausführungsform ist wenigstens eine Erfassungseinrichtung in der Transportrichtung der Kunststoffvorformlinge vor oder nach der Erwärmungseinrichtung angeordnet. Dabei wäre es weiterhin möglich, dass eine Erfassungseinrichtung vor und eine Erfassungseinrichtung nach der Erwärmungseinrichtung angeordnet ist. Bei einer weiteren bevorzugten Ausführungsform ist wenigstens eine Erfassungseinrichtung in einem Bereich einer Zuführeinrichtung, welche die Kunststoffvorformlinge der Erwärmungseinrichtung zuführt oder in einem Bereich einer Abführeinrichtung, welche die erwärmten Kunststoffvorformlinge abführt, angeordnet. Weiterhin wäre es auch möglich, dass beide Erfassungseinrichtungen in diesem Bereich angeordnet sind.

Einer weiteren vorteilhaften Ausführungsform weist die Vorrichtung eine Auswerteeinrichtung auf, welche unter Verwendung von Messergebnissen der ersten Erfassungseinrichtung und/oder der zweiten Erfassungseinrichtung wenigstens einen Wert ermittelt, der für ein Absorptionsverhalten und/oder ein Transmissionsverhalten der Kunststoffvorformlinge und/oder der aus diesen Kunststoffvorformlingen hergestellten Kunststoffbehältnisse charakteristisch ist.

Bei einer weiteren bevorzugten Ausführungsform weist wenigstens eine Erfassungseinrichtung eine Emittereinrichtung auf, welche elektromagnetische Strahlung ausgibt sowie eine Detektoreinrichtung, welche von Ermittereinrichtung ausgegebene und von Kunststoffvorformlingen und/oder Kunststoffbehältnissen transmittierte Strahlung detektiert. Auf diese Weise kann ein Wellenlängenspektrum aufgenommen werden, aus dem das Absorptionsverhalten der Kunststoffvorformlinge oder Kunststoffbehältnisse ermittelt werden kann.

Bei einer bevorzugten Ausführungsform weist wenigstens eine Erfassungseinrichtung und insbesondere die Erfassungseinrichtung zur Ermittlung des Absorptionsverhaltens im sichtbaren Wellenlängenbereich eine Bildaufnahmeeinrichtung auf, welche ein ortsaufgelöstes Bild der Kunststoffvorformlinge und/oder der hieraus hergestellten Kunststoffbehältnisse aufnimmt. Weiterhin ist in diesem Fall bevorzugt eine Auswerteeinrichtung vorgesehen, welche aus diesem Bild eine Information ableitet, welche für eine Absorption und/oder Transmission des Kunststoffvorformlings charakteristisch ist.

Die vorliegende Erfindung ist weiterhin auf eine Anlage zum Herstellen von Kunststoffbehältnissen mit einer Vorrichtung der oben beschriebenen Art gerichtet, sowie einer in einer Transportrichtung der Kunststoffvorformlinge dieser Vorrichtung nachgeordneten Umformungseinrichtung zum Umformen von Kunststoffvorformlingen zu Kunststoffbehältnissen.

Besonders bevorzugt handelt es sich bei dieser Umformungseinrichtung um eine Blasmaschine und insbesondere eine Streckblasmaschine. Besonders bevorzugt weist diese Umformungseinrichtung eine Vielzahl von Umformungsstationen auf, welche bevorzugt an einem gemeinsamen beweglichen und insbesondere drehbaren Träger angeordnet sind. Bevorzugt handelt es sich bei diesen Umformungsstationen und Blasstationen. Bevorzugt weisen diese Umformungsstationen jeweils stangenartige Körper und insbesondere Reckstangen auf, welche die Kunststoffvorformlinge in ihrer Längsrichtung dehnen. Daneben weisen die Umformungsstationen bevorzugt auch Beaufschlagungseinrichtungen auf, welche die Kunststoffvorformlinge mit einem fließfähigen und insbesondere gasförmigen Medium beaufschlagen.

Bei einer bevorzugten Ausführungsform weist die Umformungseinrichtung eine Steuerungseinrichtung auf, welche insbesondere getrennt für jede Umformungsstation die Umformungsprozesse steuert.

Besonders bevorzugt ist die Steuerungseinrichtung dazu geeignet und bestimmt, die Umformungsvorgänge in Abhängigkeit von Messergebnissen der Erfassungseinrichtungen zu steuern und/oder zu regeln. So können beispielsweise Blasdrücke sowie die zeitliche Abfolge, mit der die Kunststoffvorformlinge damit beaufschlagt werden, angepasst werden. Auch kann beispielsweise eine Bewegung der oben erwähnten Reckstange an die von den Erfassungseinrichtungen gemessenen Werte angepasst werden. Besonders bevorzugt erlaubt die Steuerungseinrichtung eine individuelle Steuerung des Umformungsprozesses für jeden einzelnen Kunststoffvorformling.

Weitere Vorteile und Ausführungsformen ergeben sich aus der beigefügten Zeichnung:
Darin zeigen:

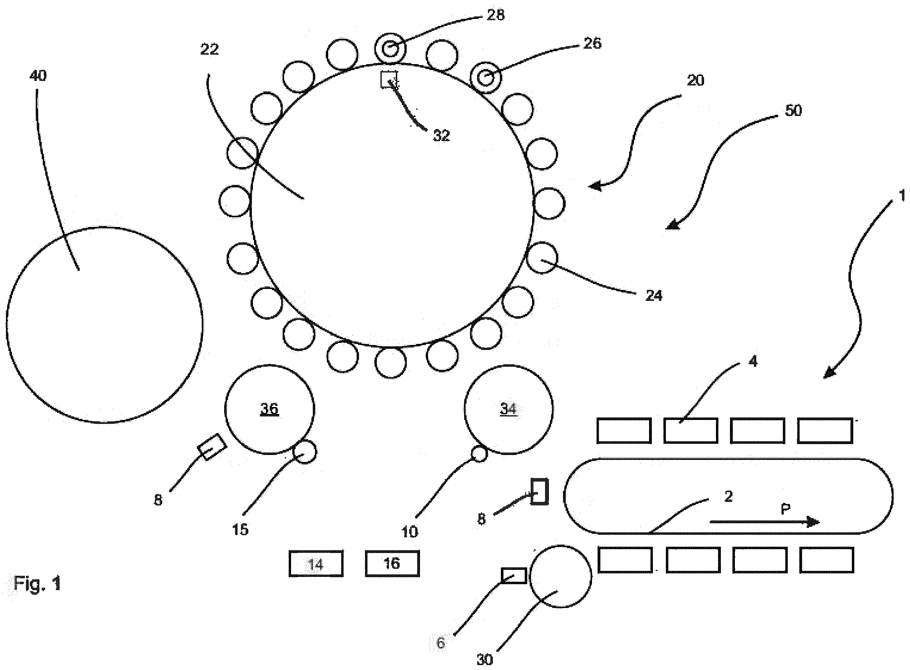

- Fig. 1: eine schematische Darstellung einer erfindungsgemäßen Anlage zum Herstellen von Kunststoffbehältnissen.

Fig. 1 zeigt eine Anlage 50 zum Herstellen von Kunststoffbehältnissen 15. Diese Anlage weist hier eine Vorrichtung 1 zum Erwärmen von Kunststoffvorformlingen 10 auf sowie eine dieser Vorrichtung 1 nachgeordnete Umformungseinrichtung 20 zum Umformen dieser Kunststoffvorformlinge 10 zu Kunststoffbehältnissen 15.

Bei der in Fig. 1 gezeigten Ausführungsform weist die Umformungseinrichtung 20 einen drehbaren Träger 22 auf, an dem eine Vielzahl von Umformungsstationen 24 zum Umformen der Kunststoffvorformlinge zu den Kunststoffbehältnissen 15 angeordnet ist. Die einzelnen Umformungsstationen 24 weisen bevorzugt jeweils Blasformen 26 auf, innerhalb derer die Kunststoffvorformlinge umgeformt werden. Daneben weisen die Umformungsstationen 24 jeweils Reckstangen 28 auf, welche in die Kunststoffvorformlinge 10 einführbar sind, um diese in deren Längsrichtung zu dehnen.

Daneben weisen die einzelnen Umformungsstationen 24 jeweils Ventileinheiten 32 mit einer Vielzahl von Ventilen auf, welche die Zuführung der Blasluft steuern, mit welcher die Kunststoffvorformlinge expandiert werden.

Das Bezugszeichen 8 kennzeichnet einen Zuführstern, welcher der Umformungseinrichtung 20 die Kunststoffvorformlinge zuführt und das Bezugszeichen 36 kennzeichnet, einen Abführstern, der die gefertigten Kunststoffbehältnisse 15 von der Umformungseinrichtung 20 abführt.

Das Bezugszeichen 40 kennzeichnet eine weitere Behandlungseinrichtung zum Behandeln der Kunststoffbehältnisse wie insbesondere aber nicht ausschließlich eine Fülleinrichtung, welche die Kunststoffbehältnisse mit einer Flüssigkeit und insbesondere einem Getränk befüllt.

Das Bezugszeichen 1 kennzeichnet die Vorrichtung zum Erwärmen der Kunststoffvorformlinge. Diese Vorrichtung 1 weist dabei eine Transporteinrichtung 2 auf, welche die Kunststoffvorformlinge vereinzelt transportiert und insbesondere an stationär angeordneten Erwärmungseinrichtungen 4 vorbeitransportiert (Transportpfad P).

Das Bezugszeichen 30 kennzeichnet eine Zuführeinrichtung, welche der Vorrichtung 1 die Kunststoffvorformlinge 10 zuführt und das Bezugszeichen 34 kennzeichnet einen Zuführstern, welcher die erwärmten Kunststoffvorformlinge 10 von der Vorrichtung 1 abführt und der Umformungseinrichtung zuführt.

Das Bezugszeichen 6 kennzeichnet grob schematisch eine erste Erfassungseinrichtung, welche dazu geeignet und bestimmt ist, eine Absorption und/oder Transmission der zu erwärmenden Kunststoffvorformlinge zu bestimmen, wobei hier die Bestimmung insbesondere in einem nahinfraroten Wellenlängenbereich erfolgt. Diese Erfassungseinrichtung ist hier an der Zuführeinrichtung angeordnet. Es wäre jedoch auch möglich, diese Erfassungseinrichtung an einer anderen Stelle vorzusehen, etwa in einem Umlenkbereich der Vorrichtung 1, in dem die Transportrichtung der Kunststoffvorformlinge umgekehrt wird oder in einem Bereich des Zuführsterns 34.

Bevorzugt weist diese Erfassungseinrichtung 6 wenigstens einen Emitter und wenigstens einen Detektor auf, wobei die Kunststoffvorformlinge zwischen diesem Emitter und diesem Detektor transportiert werden und auf diese Weise die Absorption und/oder Transmission bestimmt wird.

Das Bezugszeichen 8 kennzeichnet eine zweite Erfassungseinrichtung, welche zumindest indirekt eine Erfassung einer Absorption und/oder Transmission der Kunststoffvorformlinge oder der hieraus gefertigten Kunststoffbehältnisse (insbesondere in einem sichtbaren Wellenlängenbereich) ermöglicht. Diese weitere Erfassungseinrichtung kann dabei an unterschiedlichen Bereichen der Anlage 50 positioniert sein, wie in Fig. 1 gezeigt.

Auch diese Erfassungseinrichtung kann dabei wenigstens einen Emitter und wenigstens einen Detektor aufweisen. Es wäre jedoch auch möglich, dass diese Erfassungseinrichtung zur Erfassung anderer Eigenschaften wie etwa einer Farbe der Kunststoffvorformlinge oder Kunststoffbehältnisse dient und diese Eigenschaften verwendet werden, um eine Absorption und/oder Transmission der Kunststoffvorformlinge im sichtbaren Wellenlängenbereich zu ermitteln.

In Abhängigkeit von der von den von der Erfassungseinrichtung 6 und/oder von der Erfassungseinrichtung 8 erfassten Werten der Absorption und/oder Transmission kann die Erwärmung der Kunststoffvorformlinge gesteuert werden. Insbesondere wird jedoch auch die Umformung der Kunststoffvorformlinge zu den Kunststoffbehältnissen unter Verwendung dieser Werte gesteuert. So können beispielsweise die einzelnen Ventileinrichtungen der Ventileinheiten 32 entsprechend gesteuert werden.

Weiterhin ist bevorzugt eine Zuordnungseinrichtung 16 vorgesehen, welche jedem von der Erfassungseinrichtung 6 erfassten und/oder inspizierten Kunststoffvorformling eine bestimmte Umformungsstation zuordnet, in welcher später dieser Kunststoffvorformling zu einem Kunststoffbehältnis geblasen wird. Durch diese Zuordnung ist es möglich, dass die Parameter, mit welchen dieser Kunststoffvorformling umgeformt wird, individuell an diesen Kunststoffvorformling anzupassen.

## Patentansprüche

1. Verfahren zum Erwärmen von Kunststoffvorformlingen (10), wobei die Kunststoffvorformlinge (10) entlang eines vorgegebenen Transportpfads transportiert und während dieses Transports durch Beaufschlagung mit elektromagnetischer Strahlung erwärmt werden, wobei eine Absorption und/oder Transmission der Kunststoffvorformlinge (10) für Strahlung in einem infraroten Wellenlängenbereich bestimmt wird,
**dadurch gekennzeichnet, dass**
eine Absorption und/oder Transmission der Kunststoffvorformlinge und/oder der aus diesen Kunststoffvorformlingen (10) hergestellten Kunststoffbehältnisse für Strahlung in einem sichtbaren Wellenlängenbereich bestimmt wird.

2. Verfahren nach Anspruch 1,
**dadurch gekennzeichnet, dass**
eine Farbe der Kunststoffvorformlinge (10) und/oder der aus diesen Kunststoffvorformlingen (10) hergestellten Kunststoffbehältnisse ermittelt wird und insbesondere die Absorption und/oder Transmission der Kunststoffvorformlinge (10) für Strahlung in dem sichtbaren Wellenbereich aus der Farbe der Kunststoffvorformlinge (10) ermittelt wird.

3. Verfahren nach wenigstens einem der vorangegangenen Ansprüche,
**dadurch gekennzeichnet, dass**
wenigstens eine Absorption und/oder Transmission der Kunststoffvorformlinge (10) vor der Erwärmung der Kunststoffvorformlinge (10) gemessen wird.

4. Verfahren nach wenigstens einem der vorangegangenen Ansprüche,
**dadurch gekennzeichnet, dass**
die erwärmten Kunststoffvorformlinge (10) zu Kunststoffbehältnissen und insbesondere Kunststoffflaschen expandiert werden.

5. Verfahren nach dem vorangegangenen Anspruch,
**dadurch gekennzeichnet, dass**
ein Absorptionsverhalten der aus den Kunststoffvorformlingen (10) gefertigten Kunststoffbehältnissen bestimmt wird.

6. Verfahren nach wenigstens einem der vorangegangenen Ansprüche,
**dadurch gekennzeichnet, dass**
wenigstens ein für die gefertigten Kunststoffbehältnisse charakteristisches Merkmal bestimmt wird und dieses Merkmal aus einer Gruppe von Merkmalen ausgewählt ist, welche eine Wandungsstärke des Kunststoffbehältnisses, eine Wandungsstärkenverteilung, eine Farbe, das Auftreten von Materialfehlern und dergleichen enthält.

7. Verfahren nach wenigstens einem der vorangegangenen Ansprüche,
**dadurch gekennzeichnet, dass**
aus der Absorption oder Transmission für elektromagnetische Strahlung wenigstens ein Wert bestimmt wird, der für ein Wärmeaufnahmeverhalten der Kunststoffvorformlinge charakteristisch ist.

8. Verfahren nach wenigstens einem der vorangegangenen Ansprüche,
**dadurch gekennzeichnet, dass**
zur Bestimmung der Absorption und/oder Transmission Emitter verwendet werden, welche eine elektromagnetische Strahlung in einem vorgegebenen Wellenlängenspektrum insbesondere in einem nahinfraroten und/oder einem sichtbaren Wellenlängenbereich ausgeben.

9. Verfahren nach wenigstens einem der vorangegangenen Ansprüche,
**dadurch gekennzeichnet, dass**
die Absorption und/oder Transmission im sichtbaren Wellenlängenbereich weiterhin verwendet wird, um eine Farbe der Kunststoffvorformlinge zu ermitteln.

10. Verfahren nach wenigstens einem der vorangegangenen Ansprüche,
**dadurch gekennzeichnet, dass**
eine statistische Auswertung der Kunststoffvorformlinge und/oder der aus diesen Kunststoffvorformlingen (10) hergestellten Kunststoffbehältnisse vorgenommen wird.

11. Vorrichtung (1) zum Erwärmen von Kunststoffvorformlingen (10) mit einer Transporteinrichtung (2), welche die Kunststoffbehältnisse entlang eines vorgegebenen Transportpfads (P) transportiert und mit wenigstens einer Erwärmungseinrichtung (4), welche die Kunststoffvorformlinge (10) durch Beaufschlagung mit elektromagnetischer Strahlung erwärmt und mit einer Erfassungseinrichtung (6), welche eine Absorption und/oder Transmission der Kunststoffvorformlinge für elektromagnetische Strahlung in einem infraroten Wellenlängenbereich erfasst,
**dadurch gekennzeichnet, dass**
die Vorrichtung (1) eine Erfassungseinrichtung (8) aufweist, welche eine Absorption und/oder Transmission der Kunststoffvorformlinge und/oder der später aus diesen Kunststoffvorformlingen hergestellten Kunststoffbehältnisse (15) für elektromagnetische Strahlung in einem sichtbaren Wellenlängenbereich zumindest mittelbar erfasst.

12. Vorrichtung (1) nach Anspruch 11,
**dadurch gekennzeichnet, dass**
wenigstens eine Erfassungseinrichtung (6) in der Transportrichtung der Kunststoffvorformlinge (10) vor oder nach der Erwärmungseinrichtung (1) angeordnet ist.

13. Vorrichtung (1) nach wenigstens einem der Ansprüche 11 - 12,
**dadurch gekennzeichnet, dass**
die Vorrichtung (1) eine Auswerteeinrichtung (14) aufweist, welche unter Verwendung von Messergebnissen der ersten Auswerteeinrichtung und der zweiten Auswerteeinrichtung wenigstens einen Wert ermittelt, der für eine Absorptionsverhalten und/oder ein Transmissionsverhalten der Kunststoffvorformlinge (10) und/oder der aus diesen Kunststoffvorformlingen (10) hergestellten Kunststoffbehältnisse (15) ermittelt.

14. Vorrichtung (1) nach wenigstens einem der Ansprüche 11 - 13,
**dadurch gekennzeichnet, dass**
wenigstens eine Erfassungseinrichtung (8) eine Emittereinrichtung aufweist, die elektromagnetische Strahlung ausgibt sowie eine Detektoreinrichtung, welche von der Emittereinrichtung ausgegebene von den Kunststoffvorformlingen (10) und/oder Kunststoffbehältnissen transmittierte Strahlung detektiert.

15. Anlage zum Herstellen von Kunststoffbehältnissen mit einer Vorrichtung (1) nach wenigstens einem der vorangegangenen Ansprüche 11 - 14 und einer in einer Transportrichtung der Kunststoffvorformlinge dieser Vorrichtung (1) nachgeordneten Umformungseinrichtung (20) zum Umformen von Kunststoffvorformlingen (10) zu Kunststoffbehältnissen (15).

## Claims

1. A method for heating plastic preforms (10), wherein the plastic preforms (10) are transported along a predetermined transport path and are heated during this transport by applying electromagnetic radiation, wherein an absorption and/or transmission of the plastic preforms (10) is determined for radiation in an infrared wavelength range, **characterized in that**
an absorption and/or transmission of the plastic preforms and/or of the plastic containers produced from these plastic preforms (10) is determined for radiation in a visible wavelength range.

2. The method according to claim 1,
**characterized in that**
a color of the plastic preforms (10) and/or of the plastic containers produced from these plastic preforms (10) is determined and in particular the absorption and/or transmission of the plastic preforms (10) for radiation in a visible wavelength range is determined from the color of the plastic preforms (10).

3. The method according to at least one of the preceding claims, **characterized in that**
at least one absorption and/or transmission of the plastic preforms (10) is measured before heating the plastic preforms (10).

4. The method according to at least one of the preceding claims, **characterized in that**
the heated plastic preforms (10) are expanded to form plastic containers and in particular plastic bottles.

5. The method according to the preceding claim,
**characterized in that**
an absorption behavior of the plastic containers produced from the plastic preforms (10) is determined.

6. The method according to at least one of the preceding claims, **characterized in that**
at least one characteristic feature for the manufactured plastic containers is determined and this feature is selected from a group of features which includes a wall thickness of the plastic container, a wall thickness distribution, a color, the occurrence of material defects and the like.

7. The method according to at least one of the preceding claims, **characterized in that**
at least one value characteristic of a heat absorption behavior of the plastic preforms is determined from the absorption or transmission for electromagnetic radiation.

8. The method according to at least one of the preceding claims, **characterized in that**
for determining the absorption and/or transmission, emitters are used which emit electromagnetic radiation in a predetermined wavelength spectrum in particular in a near-infrared and/or visible wavelength area.

9. The method according to at least one of the preceding claims, **characterized in that**
the absorption and/or transmission in the visible wavelength range is further used to determine a color of the plastic preforms.

10. The method according to at least one of the preceding claims, **characterized in that**
a statistical evaluation of the plastic preforms and/or of the plastic containers produced from these plastic preforms (10) is carried out.

11. An apparatus (1) for heating plastic preforms (10), having a transport device (2) which transports the plastic containers along a predetermined transport path (P), and having at least one heating device (4) which heats the plastic preforms (10) by applying electromagnetic radiation, and having a detection device (6) which detects an absorption and/or transmission of the plastic preforms for electromagnetic radiation in an infrared wavelength range,
**characterized in that**
the apparatus (1) has a detection device (8) which at least indirectly detects an absorption and/or transmission of the plastic preforms and/or of the plastic containers (15) which are subsequently produced from these plastic preforms, for electromagnetic radiation in a visible wavelength range.

12. The apparatus (1) according to claim 11,
**characterized in that**
at least one detection device (6) is arranged in the transport direction of the plastic preforms (10) before or after the heating device (1).

13. The apparatus (1) according to at least on of claims 11-12, **characterized in that**
the apparatus (1) has an evaluation device (14) which, using measurement results of the first evaluation device and the second evaluation device, determines at least one value which is determined for an absorption behavior and/or a transmission behavior of the plastic preforms (10) and/or of the plastic containers (15) produced from these plastic preforms (10).

14. The apparatus according to at least one of claims 11-13,
**characterized in that**
ate least one detection device (8) comprises an emitter device which emits electromagnetic radiation and a detector device which detects radiation emitted by the emitter device and transmitted from the plastic preforms (10) and/or plastic containers.

15. A plant for producing plastic containers, having an apparatus (1) according to at least one of claims 11-14 and a forming device (20), arranged downstream of this apparatus (1) in a transport direction of the plastic preforms, for forming plastic preforms into plastic containers.

## Revendications

1. Procédé de chauffage de préformes en matière plastique (10), dans lequel les préformes en matière plastique (10) sont transportées le long d'un trajet de transport prédéfini et sont chauffées par exposition à un rayonnement électromagnétique pendant ledit transport, dans lequel une absorption et/ou une transmission des préformes en matière plastique (10) pour le rayonnement sont définies dans une plage de longueurs d'onde infrarouge,
**caractérisé en ce que**
une absorption et/ou une transmission des préformes en matière plastique et/ou des récipients en matière plastique fabriqués à partir desdites préformes en matière plastique (10) pour le rayonnement sont définies dans une plage de longueurs d'onde visible.

2. Procédé selon la revendication 1,
**caractérisé en ce que**
une couleur des préformes en matière plastique (10) et/ou des récipients en matière plastique fabriqués à partir desdites préformes en matière plastique (10) est déterminée et en particulier l'absorption et/ou la transmission des préformes en matière plastique (10) pour le rayonnement sont déterminées dans la plage d'ondes visible à partir de la couleur des préformes en matière plastique (10).

3. Procédé selon au moins l'une quelconque des revendications précédentes,
**caractérisé en ce que**
au moins une absorption et/ou une transmission des préformes en matière plastique (10) sont mesurées avant le chauffage des préformes en matière plastique (10).

4. Procédé selon au moins l'une quelconque des revendications précédentes,
**caractérisé en ce que**
les préformes en matière plastique (10) chauffées sont expansées en des récipients en matière plastique et en particulier en des bouteilles en matière plastique.

5. Procédé selon la revendication précédente,
**caractérisé en ce que**
un comportement d'absorption des récipients en matière plastique produits à partir des préformes en matière plastique (10) est défini.

6. Procédé selon au moins l'une quelconque des revendications précédentes,
**caractérisé en ce que**
au moins une caractéristique propre aux récipients en matière plastique produits est définie, et cette caractéristique est choisie parmi un groupe de caractéristiques, lequel contient une épaisseur de paroi du récipient en matière plastique, une répartition d'épaisseur de paroi, une couleur, l'apparition de défauts de matériau et similaires.

7. Procédé selon au moins l'une quelconque des revendications précédentes,
**caractérisé en ce que**
est définie à partir de l'absorption ou de la transmission pour le rayonnement électromagnétique au moins une valeur, qui est propre à un niveau d'absorption de chaleur des préformes en matière plastique.

8. Procédé selon au moins l'une quelconque des revendications précédentes,
**caractérisé en ce que**
pour définir l'absorption et/ou la transmission, des émetteurs sont utilisés, lesquels émettent un rayonnement électromagnétique dans un spectre de longueurs d'onde prédéfini en particulier dans une plage de longueurs d'onde proche de l'infrarouge et/ou visible.

9. Procédé selon au moins l'une quelconque des revendications précédentes,
**caractérisé en ce que**
l'absorption et/ou la transmission sont utilisées par ailleurs dans la plage de longueurs d'onde visible pour déterminer une couleur des préformes en matière plastique.

10. Procédé selon au moins l'une quelconque des revendications précédentes,
**caractérisé en ce que**
une évaluation statistique des préformes en matière plastique et/ou des récipients en matière plastique fabriqués à partir desdites préformes en matière plastique (10) est effectuée.

11. Dispositif (1) de chauffage de préformes en matière plastique (10) avec un système de transport (2), lequel transporte les récipients en matière plastique le long d'une voie de transport (P) prédéfinie, et avec au moins un système de chauffage (4), lequel chauffe les préformes en matière plastique (10) par exposition à l'action d'un rayonnement électromagnétique, et avec un système de détection (6), lequel détecte une absorption et/ou une transmission des préformes en matière plastique pour un rayonnement électromagnétique dans une plage de longueurs d'onde infrarouge,
**caractérisé en ce que**
le dispositif (1) présente un système de détection (8), lequel détecte au moins indirectement dans une plage de longueurs d'onde visible une absorption et/ou une transmission des préformes en matière plastique et/ou des récipients en matière plastique (15) fabriqués ultérieurement à partir desdites préformes en matière plastique pour le rayonnement électromagnétique.

12. Dispositif (1) selon la revendication 11,
**caractérisé en ce que**
au moins un système de détection (6) est disposé devant ou après le système de chauffage (1) dans la direction de transport des préformes en matière plastique (10).

13. Dispositif (1) selon au moins l'une quelconque des revendications 11 - 12,
**caractérisé en ce que**
le dispositif (1) présente un système d'évaluation (14), lequel détermine, en utilisant des résultats de mesure du premier système d'évaluation et du deuxième système d'évaluation, au moins une valeur, qui détermine un comportement d'absorption et/ou un comportement de transmission des préformes en matière plastique (10) et/ou des récipients en matière plastique (15) fabriqués à partir desdites préformes en matière plastique (10).

14. Dispositif (1) selon au moins l'une quelconque des revendications 11 - 13,
**caractérisé en ce que**
au moins un système de détection (8) présente un système émetteur, qui émet le rayonnement électromagnétique, ainsi qu'un système détecteur, lequel détecte un rayonnement émis par le système émetteur, transmis par les préformes en matière plastique (10) et/ou les récipients en matière plastique.

15. Installation de fabrication de récipients en matière plastique avec un dispositif (1) selon au moins l'une quelconque des revendications précédentes 11 - 14 et un système de façonnage (20) disposé en aval dudit dispositif (1) dans une direction de transport des préformes en matière plastique, destiné à façonner des préformes en matière plastique (10) en des récipients en matière plastique (15).
